# EUROPÄISCHE PATENTSCHRIFT

(11) **EP 2 059 407 B1**
(45) Veröffentlichungstag und Bekanntmachung des Hinweises auf die Patenterteilung: **28.09.2011**
(21) Anmeldenummer: 07786076.5
(22) Anmeldetag: 16.07.2007
(51) Int. Cl.: B60K 35/00, G09F 19/14

(54) **VERFAHREN ZUM BEDIENEN VON EINRICHTUNGEN EINES FAHRZEUGS UND BEDIENVORRICHTUNG FÜR SOLCHE EINRICHTUNGEN**
METHOD FOR OPERATING DEVICES OF A VEHICLE, AND OPERATING DEVICE FOR SUCH DEVICES
PROCEDE POUR COMMANDER DES EQUIPEMENTS D'UN VEHICULE ET DISPOSITIF DE COMMANDE POUR DE TELS EQUIPEMENTS

(30) Priorität: 31.08.2006 DE 102006040946; 09.03.2007 DE 102007011543
(43) Veröffentlichungstag der Anmeldung: 20.05.2009
(73) Patentinhaber: Volkswagen Aktiengesellschaft, 38436 Wolfsburg (DE)
(72) Erfinder: WÄLLER, Christoph, 38102 Braunschweig (DE); BACHFISCHER, Katharina, 40476 Düsseldorf (DE); LILIENTHAL, Jörg, 38518 Gifhorn (DE)
(86) Internationale Anmeldenummer: PCT/EP2007/006274
(87) Internationale Veröffentlichungsnummer: WO 2008/025407

(56) Entgegenhaltungen:
- WO-A-2004/081777
- JP-A- 2005 071 286
- US-A1- 2004 158 374
- US-A1- 2006 066 507

## Beschreibung

Die vorliegende Erfindung betrifft ein Verfahren zum Bedienen von Einrichtungen eines Fahrzeugs, bei dem auf einem Display eine Anzeigevorrichtung für verschiedene Betrachtungswinkel verschiedene Informationen dargestellt werden. Dabei sind den jeweiligen Betrachtungswinkeln Sitzpositionen von Nutzern zugeordnet. Ferner betrifft die Erfindung eine Bedienvorrichtung für Einrichtungen eines Fahrzeugs mit einer Eingabeeinheit und einer solchen Anzeigevorrichtung.

Anzeigevorrichtungen mit einem Display, bei dem durch eine optische Barriere dem Betrachter rechts und links der mittigen Sichtachse jeweils ein unterschiedliches Bild angezeigt wird, sind kommerziell erhältlich. Sie werden z.B. von der Firma Sharp unter der Bezeichnung Dual-View-Display vertrieben. Es ist bekannt, derartige Dual-View-Displays in einem Kraftfahrzeug einzusetzen, um dem Fahrer andere Informationen anzuzeigen, als dem Beifahrer. Beispielsweise kann dem Fahrer die Anzeige eines Navigationssystems zur Verfügung gestellt werden, während der Beifahrer gleichzeitig einen Film betrachten kann.

Nachteilhaft an der Verwendung derartiger Dual-View-Displays in einem Kraftfahrzeug ist, dass sich Probleme ergeben, wenn sie mit herkömmlichen Bedienvorrichtungen oder Bedienverfahren in einem Kraftfahrzeug eingesetzt werden, die während der Bedienung die Anzeigevorrichtung zur Veranschaulichung des Bedienvorgangs verwenden.

In der WO 2004/081777 A1 wird ein Anzeigesystem mit einem als Touchscreen ausgebildeten Dual-View-Display beschrieben, bei dem die Richtung, aus der das Display betätigt wird, durch die Orientierung einer Betätigungshand eines Nutzers vor dem Display bestimmt wird.

Es ist die Aufgabe der vorliegenden Erfindung, ein Verfahren zum Bedienen von Einrichtungen eines Fahrzeugs und eine Bedienvorrichtung für solche Einrichtungen bereitzustellen, welche in Verbindung mit der eingangs genannten Anzeigevorrichtung verwendet werden können.

Diese Aufgabe wird erfindungsgemäß durch ein Verfahren mit den Merkmalen des Anspruchs 1 und einer Bedienvorrichtung mit den Merkmalen des Anspruchs 16 gelöst. Vorteilhafte Aus- und Weiterbildungen ergeben sich aus den Unteransprüchen.

Bei dem erfindungsgemäßen Verfahren wird die Position eines Objekts in einer Schaltzone erfasst und ein der Schaltzone zugeordnetes Schaltsignal erzeugt. Die Sitzposition eines dem Objekt zugeordneten Nutzers wird identifiziert und in Abhängigkeit von dem Schaltsignal und von der Sitzposition des Nutzers, der das Schaltsignal ausgelöst hat, wird ein Steuersignal für die Einrichtungen des Fahrzeugs und/oder die Anzeigevorrichtung erzeugt.

Bevorzugt wird der Sitzposition des Nutzers, der das Schaltsignal ausgelöst hat, ein Betrachtungswinkel des Displays zugeordnet, und die auf dem Display dargestellten Informationen werden nur für den Betrachtungswinkel dieses Nutzers geändert. Erfindungsgemäß kann somit das Auslösen des Schaltsignals graphisch so auf dem Display veranschaulicht werden, dass nur der Nutzer die zu diesem Bedienvorgang gehörigen Informationen wahrnimmt, der den Bedienvorgang durchführt. Insbesondere wird ein Nutzer auf einer anderen Sitzposition in der Wahrnehmung der für seinen Betrachtungswinkel dargestellten Informationen nicht gestört, da sie während des Bedienvorgangs unverändert bleiben können.

Die Schaltzone wird beispielsweise von einer Fläche des Displays und/oder einem Bereich unmittelbar vor dieser Fläche gebildet. Bei dieser Fläche des Displays wird z.B. eine Bedienfunktion angezeigt, die dadurch betätigt wird, dass ein erfassbares Objekt in die Schaltzone dieser Bedienfunktion gebracht wird. Die Position des Objekts kann z.B. dadurch erfasst werden, dass die Berührung einer Oberfläche des Displays detektiert wird.

Des Weiteren kann die Schaltzone zumindest einem von dem Display abgesetzten Bedienelement zugeordnet sein. In diesem Fall kann die Bedienfunktion und die Identifizierung des Nutzers dadurch erfolgen, dass das Objekt in die Nähe des Bedienelements gebracht wird oder das Bedienelement berührt. Des Weiteren ist es auch möglich, dass mittels der Schaltzone nur der Nutzer identifiziert wird. Die eigentliche Bedienfunktion wird ggf. in Abhängigkeit von der Sitzposition des Nutzers durch die Betätigung des Bedienelements selbst ausgewählt. Das Bedienelement kann in diesem Fall ein herkömmliches Bedienelement, wie z. B. ein mechanischer Schalter sein. Der mechanische Schalter kann ein Drehschalter sein. Des Weiteren könnte eine Multifunktionsbedienvorrichtung verwendet werden, wie sie beispielsweise in der EP 1 212 208 B1 beschrieben ist.

Gemäß einer bevorzugten Ausführungsform ist das Objekt ein Körperteil eines Nutzers, insbesondere ein Finger bzw. die Fingerspitze eines Nutzers. In diesem Fall lässt sich die Position des Objekts, d.h. des Fingers des Nutzers, durch eine kapazitive Kopplung zwischen dem Objekt und einer bei der Schaltzone angeordneten Empfangseinrichtung erfassen. Die Empfangseinrichtung kann sich außerhalb des Displays befinden. Vorzugsweise ist die Empfangseinrichtung jedoch von der Anzeigevorrichtung, insbesondere von dem Display, oder dem abgesetzten Bedienelement umfasst. Falls die Empfangseinrichtung von dem Display umfasst ist, kann der Finger des Nutzers, der sich vor einer auf dem Display dargestellten Bedienfunktion befindet, detektiert werden. Dabei kann der Finger das Display berühren, dies ist jedoch nicht unbedingt erforderlich. Für die kapazitive Kopplung mit der Empfangseinrichtung reicht es aus, dass sich der Finger in einem gewissen Abstand vor dem Display befindet.

Bei dem erfindungsgemäßen Verfahren wird die Sitzposition des dem Objekt zugeordneten Nutzers dadurch identifiziert, dass ein Identifikationscode mittels einer Elektrodeneinrichtung in den Körper des Nutzers kapazitiv eingekoppelt und bei der Empfangseinrichtung kapazitiv aus dem Körper des Nutzers ausgekoppelt wird. Dabei ist der Identifikationscode insbesondere nur dann in den Körper eines Nutzers kapazitiv einkoppelbar, wenn dieser auf einer der Elektrodeneinrichtung zugeordneten Sitzposition sitzt. Der Identifikationscode kann somit mittels quasi-elektrostatischer Felder über den Körper des Nutzers an die Empfangseinrichtung übertragen werden. Bei den Schnittstellen zwischen der Elektrodeneinrichtung und dem Nutzer sowie zwischen dem Nutzer und der Empfangseinrichtung kann jeweils eine Kondensatoreinrichtung verwendet werden, die in einem Schwingkreis eingebunden ist, der bei der Empfangseinrichtung als Parallelschwingkreis betrieben wird und bei der Elektrodeneinrichtung als Serienschwingkreis betrieben wird.

Der Identifikationscode kann beispielsweise den Nutzer und/oder die Sitzposition identifizieren. Wird der Nutzer durch den Identifikationscode identifiziert, kann das Schaltsignal zumindest einer Schaltfläche nur dann erzeugt werden, wenn es von einem Nutzer betätigt wird. Es lässt sich somit ein nutzerselektives Bedienverfahren realisieren. Ferner kann die Art der angezeigten Informationen für einen Betrachtungswinkel von dem Identifikationscode des Nutzers auf der diesem Betrachtungswinkel zugeordneten Sitzposition abhängen. Somit lässt sich bei dem erfindungsgemäßen Verfahren auch in Abhängigkeit von der Sitzposition entscheiden, ob bestimmte Informationen angezeigt werden dürfen. Beispielsweise kann es auf diese Weise ausgeschlossen werden, dass während der Fahrt des Fahrzeugs bei dem Betrachtungswinkel für den Fahrer ein Film angezeigt wird.

Das Layout virtueller Bedienobjekte, wie z.B. Schaltflächen, die auf dem Display angezeigt werden, ist herkömmlicherweise für eine Bedienung durch den Fahrer optimiert. Für den Beifahrer ist die Ergonomie der Anordnung der Bedienobjekte entsprechend schlechter. Mit dem erfindungsgemäßen Verfahren ist es möglich, jeweils ergonomisch optimierte Platzierungen der Bedienobjekte bereitzustellen, selbst wenn der Fahrer und der Beifahrer die gleiche Anwendung nutzen. Beispielsweise können für den Fahrer die Bedienobjekte weiter auf einer Seite des Displays und etwas größer dargestellt sein, wohingegen die Bedienobjekte für den Beifahrer weiter auf seiner Seite und etwas kleiner dargestellt sind.

Die erfindungsgemäße Bedienvorrichtung umfasst eine Einrichtung zum Erfassen der Position eines Objekts in einer Schaltzone, eine Einrichtung zum Identifizieren der Sitzposition eines dem Objekt zugeordneten Nutzers und eine Steuereinrichtung, mit der in Abhängigkeit von der erfassten Position des Objekts und von der Sitzposition des Nutzers ein Steuersignal für die Einrichtungen des Fahrzeugs und/oder die Anzeigevorrichtung erzeugbar ist. Das Steuersignal ändert insbesondere die auf dem Display dargestellten Informationen nur für den Betrachtungswinkel der identifizierten Sitzposition. Die Schaltzone ist beispielsweise von einer Fläche des Displays und/oder einem Bereich unmittelbar vor dieser Fläche gebildet.

Die erfindungsgemäße Bedienvorrichtung ermöglicht somit die Bedienung einer interaktiven Anwendung, bei welcher bestimmte Bedienschritte auf dem Display visualisiert werden, wobei die Bedienung von einem Nutzer auf dem Display durchgeführt werden kann, wobei die Visualisierung des Bedienvorgangs nur für den Nutzer sichtbar ist, der den Bedienvorgang durchführt. Die Dual-View-Anzeige der erfindungsgemäßen Bedienvorrichtung wird somit um eine separate Bedienfunktion für verschiedene Nutzer erweitert. Durch die Identifikation des Nutzers kann z.B. der Beifahrer Bedienfunktionen auf dem Display durchführen und umfangreiche Navigationen in Menüs durchführen, die auf dem Display für einen Betrachtungswinkel dargestellt werden, ohne dass dies für den Betrachtungswinkel des Fahrers sichtbar ist und ohne dass sich die Anzeige für den Fahrer verändern müsste.

Gemäß einer Ausführungsform der erfindungsgemäßen Bedienvorrichtung umfasst die Positionserfassungseinrichtung eine berührungsempfindliche Oberfläche des Displays. Der Ort der Berührung des Objekts auf dem Display wird somit detektiert und einer gerade angezeigten Bedienfunktion zugeordnet.

Gemäß einer weiteren Ausführungsform umfasst die Bedienvorrichtung zumindest ein von dem Display abgesetztes Bedienelement. In diesem Fall kann die Schaltzone dem abgesetzten Bedienelement zugeordnet sein. Aufgrund der Position des Objekts bei der Schaltzone, d.h. bei dem abgesetzten Bedienelement, wird erfasst, welches Bedienelement betätigt werden soll. Gleichzeitig kann hierdurch die Sitzposition des dem Objekt zugeordneten Nutzers identifiziert werden. Auf diese Weise ist es möglich, auf dem Display Informationen für das betreffende Bedienelement nur für den Betrachtungswinkel der identifizierten Sitzposition anzuzeigen. Das Steuersignal kann sich dann von der Betätigung des Bedienelements und ggf. von der Sitzposition des Nutzers ableiten. Bei dem Bedienelement kann es sich um ein herkömmliches Bedienelement, z. B. ein mechanisches Bedienelement handeln. Es kann z. B. ein Drehschalter oder eine Multifunktionsbedienvorrichtung verwendet werden, wie sie in der EP 1 212 208 B1 beschrieben ist.

Gemäß einer anderen Ausführungsform umfasst die Positionserfassungseinrichtung eine Empfangseinrichtung, an die ein Signal von einem Nutzer kapazitiv übertragbar ist, wenn sich das Objekt, insbesondere ein Körperteil des Nutzers, in der Nähe der Empfangseinrichtung befindet. Die kapazitive Übertragung erfolgt, wie vorstehend erläutert, mittels quasi-elektrostatischer Felder von dem Körper des Nutzers an die Empfangseinrichtung.

Des Weiteren ist die ldentifikationseinrichtung erfindungsgemäß eine Elektrodeneinrichtung in den Sitzen potenzieller Nutzer, mittels derer ein Identifikationscode in den Körper des Nutzers kapazitiv einkoppelbar ist und bei der Empfangseinrichtung kapazitiv auskoppelbar ist. Auch in diesem Fall werden, wie vorstehend erläutert, quasi-elektrostatische Wechselwirkungseffekte zwischen dem Körper des Nutzers und der Elektroneneinrichtung bzw. der Empfangseinrichtung ausgenutzt.

Die kapazitive Kopplung zwischen dem Objekt, insbesondere dem Körperteil, z.B. dem Finger eines Nutzers, kann so sensitiv ausgebildet sein, dass es nicht erforderlich ist, dass das Objekt z.B. die Displayoberfläche berührt. Es reicht, dass sich das Objekt in einer bestimmten Schaltzone vor dem Display befindet.

Durch das erfindungsgemäße Verfahren bzw. die erfindungsgemäße Bedienvorrichtung kann vorteilhafterweise eine etwaige Ablenkung des Fahrers durch auf dem Display angezeigte Informationen gesenkt werden. Gleichermaßen kann die Privatsphäre für einen Fahrzeuginsassen, z.B. für einen Beifahrer erhöht werden, da für ihn persönliche Daten angezeigt werden können, ohne dass andere Fahrzeuginsassen diese betrachten können. Dies ist beispielsweise bei einer Anwendung in einem Taxi vorteilhaft.

Des Weiteren ist es möglich, den Fahrer während der Fahrt von bestimmten Bedienoptionen auszuschließen, die zu einer Ablenkung während der Fahrt führen würden. Dabei kann über die Anzeigevorrichtung sowohl dem Fahrer als auch dem Beifahrer die gleiche Information zur Verfügung gestellt werden. Der Fahrer kann jedoch auf bestimmte Bedienoptionen nicht zugreifen.

Die Identifikation des Nutzers, die z.B. durch eine einfache Berührung des Displays erfolgen kann, kann dazu verwendet werden, persönliche Inhalte dieses Nutzers für einen bestimmten Betrachtungswinkel darzustellen. Ferner kann ein individuelles Nutzerprofil des identifizierten Nutzers aktiviert werden. Gleichermaßen können bestimmte Personengruppen, wie z.B. Kinder von bestimmten Bedienfunktionen ausgeschlossen werden.

Mit dem erfindungsgemäßen Verfahren und der erfindungsgemäßen Bedienvorrichtung ist es nicht nur möglich, zwei separate Anwendungen auf einem einzigen Display darzustellen, sondern auch zwei Anwendungen auf einem einzigen Display zu bedienen.

Die Erfindung wird nun anhand von Ausführungsbeispielen mit Bezug zu den Zeichnungen erläutert.
Fig. 1 zeigt die Anzeigevorrichtung eines Ausführungsbeispiels der erfindungsgemäßen Bedienvorrichtung und
Fig. 2 veranschaulicht das Ausführungsbeispiel der erfindungsgemäßen Bedienvorrichtung und des Bedienverfahrens.

Die Bedienvorrichtung des Ausführungsbeispiels ist im Bereich der Mittelkonsole eines Kraftfahrzeugs untergebracht. Sie umfasst eine Anzeigevorrichtung mit einem Display 1, über welches Informationen dem Fahrer sowie weiteren Fahrzeuginsassen angezeigt werden können. Des Weiteren können der Fahrer und weitere Fahrzeuginsassen, insbesondere der Beifahrer, Einrichtungen des Fahrzeugs über die Bedienvorrichtung steuern, indem sie bestimmte Eingaben vornehmen.

Einrichtungen des Fahrzeugs umfassen die Anzeigevorrichtung selbst sowie z.B. ein Navigationsgerät, Kommunikationsgeräte, wie z.B. ein Mobiltelefon, Multimedianwendungen, wie z.B. die Musikwiedergabe, ein Beifahrer-Infotainmentsystem, ein Infotainmentsystem für die Fondinsassen, einen Fernseher oder einen Fotobetrachter sowie Systemeinrichtungen des Kraftfahrzeugs selbst. Zu den Systemeinrichtungen können beispielsweise die Heiz- und Lüftungseinrichtungen sowie eine Klimaanlage, die Einstellung von Spiegeln und Sitzen sowie weitere Einrichtungen zählen, die vom Inneren des Kraftfahrzeugs aus gesteuert werden können.

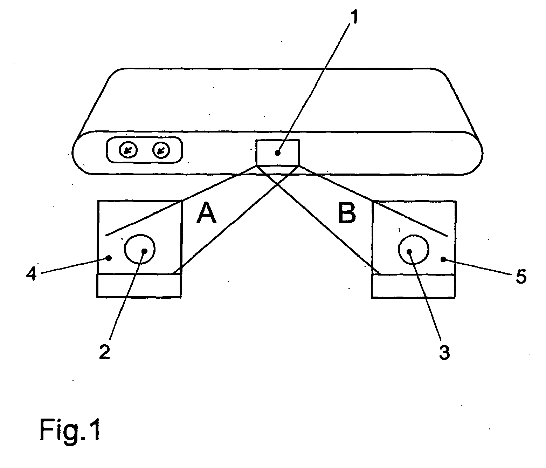

Bei dem Display 1 der Anzeigevorrichtung sind durch eine optische Barriere einem Betrachter rechts und links der mittigen Sichtachse jeweils unterschiedliche Inhalte anzeigbar. Wie aus Fig. 1 ersichtlich, betrachtet ein Fahrer 2, der auf dem Fahrersitz 4 sitzt, das Display 1 aus einem Betrachtungswinkel A, der Beifahrer 3, welcher auf einem Beifahrersitz 5 sitzt, betrachtet das Display 1 hingegen aus einem Betrachtungswinkel B. Die optische Barriere des Displays 1 ist so angeordnet, dass der Fahrer aus dem Bereich A eine andere Anzeige sehen kann, als der Beifahrer 3 aus dem Bereich B. Das Display 1 ist somit so ansteuerbar, dass für den Fahrer 2 und den Beifahrer 3 verschiedene Informationen dargestellt werden können. Dabei ist dem Betrachtungswinkel A die Sitzposition des Fahrers 2 zugeordnet und dem Betrachtungswinkel B die Sitzposition des Beifahrers 3.

Für die Bedienung der Einrichtungen bzw. der Anzeigevorrichtung des Fahrzeugs werden auf dem Display 1 auf bestimmen Flächen Bedienfunktionen angezeigt. Dabei ist es möglich, für jeden Betrachtungswinkel A, B verschiedene Bedienfunktionen anzuzeigen. Im Folgenden wird erläutert, wie eine bestimmte auf einer Fläche des Displays 1 für einen bestimmten Betrachtungswinkel angezeigte Bedienfunktion von einem Nutzer betätigt werden kann. Es wird dabei angenommen, dass dem Beifahrer 3 für seinen Betrachtungswinkel B andere Anzeigeinhalte angezeigt werden als dem Fahrer 2.

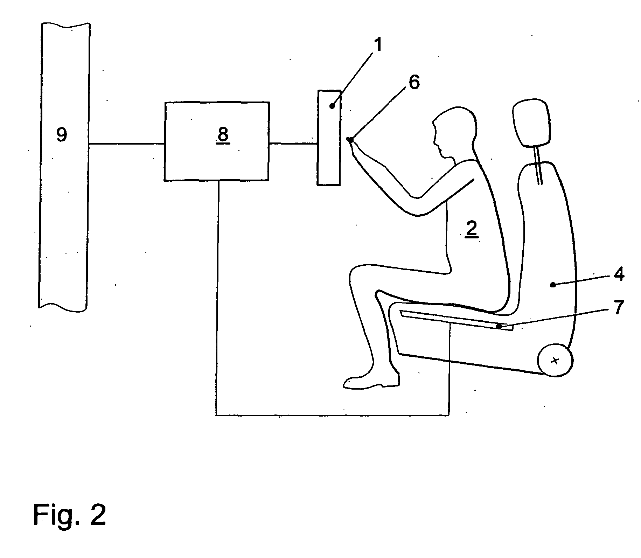

Um eine bestimmte Bedienfunktion zu betätigen, nähert z. B. der Fahrer 2, wie in Fig. 2 gezeigt, eine Fingerspitze 6 dem Bereich des Displays 1, bei dem die zu betätigende Bedienfunktion angezeigt wird. Sobald sich die Fingerspitze 6 in einer Schaltzone vor der entsprechenden Fläche des Displays befindet, wird einerseits erfasst, dass sich ein Objekt, in diesem Fall die Fingerspitze 6, in der Schaltzone befindet, und andererseits wird die Sitzposition des Nutzers 2 sowie alternativ oder zusätzlich der Nutzer 2 selbst identifiziert. Diese Positionsbestimmung und Identifikation der Sitzposition wird im Folgenden mit Bezug zu Fig. 2 erläutert:

Im Sitz 4 des Fahrers 2 befindet sich eine Elektrodenanordnung 7. Über diese Elektrodenanordnung 7 kann ein Identifikationscode kapazitiv in den Körper des Fahrers 2 eingekoppelt werden. Der Identifikationscode kann dabei die Sitzposition des Nutzers 2 sowie den Nutzer 2 selbst identifizieren. Der Identifikationscode wird über den Körper des Fahrers 2 übertragen und bei der Fingerspitze 6 kapazitiv ausgekoppelt, so dass er an eine in der Anzeigevorrichtung, insbesondere dem Display 1 untergebrachten Empfangseinrichtung übertragen werden kann.

Die Empfangseinrichtung ist mit einer Steuereinrichtung 8 verbunden, die wiederum mit der Elektrodeneinrichtung 7 kapazitiv gekoppelt ist. Bei den kapazitiven Kopplungen zwischen der Elektrodeneinrichtung 7 und dem Fahrer 2 einerseits und dem Fahrer 2 und der Empfangseinrichtung in der Anzeigevorrichtung andererseits wird ein elektrisches Feld mit einer sehr begrenzten Reichweite von z.B. einigen Zentimetern oder Dezimetern genutzt. Die Reichweite dieses Feldes bestimmt die Größe der Schaltzone vor der Fläche des Displays, bei der die Bedienfunktion angezeigt wird. Für die Signalübertragung werden relativ niedrige Trägerfrequenzen von einigen 100 kH genutzt, die zu quasi-statischen Feldern führen, d.h. Feldern, für welche weitgehend die für statische Felder zutreffenden physikalischen Ansätze gelten. Hinsichtlich weiterer Details dieser Signalübertragung wird auf die DE 10 2004 048 956 A1 und die darin zitierte weitere Literatur verwiesen, die hiermit durch Bezugnahme in die vorliegende Anmeldung aufgenommen werden. Es können insbesondere die in der DE 10 2004 048 956 A1 verwendeten Schaltungseinrichtungen Anwendung finden.

Wurde die Position der Fingerspitze 6 des Fahrers 2 in einer Schaltzone erfasst, wird ein Schaltsignal erzeugt, das dieser Schaltzone zugeordnet ist.

Die Erfassung der Position der Fingerspitze, z.B. des Beifahrers 3 und die Identifikation seiner Sitzposition erfolgen auf gleiche Weise, wie die des Fahrers 2. Bei der Betätigung einer Bedienfunktion liegt in der Steuervorrichtung somit die Information vor, von welcher Sitzposition aus ggf. welcher Nutzer welche Schaltzone betätigt hat. Aus der Anzeige der Bedienfunktion für den Betrachtungswinkel für diese Sitzposition kann die Steuervorrichtung ein Steuersignal für die Einrichtungen des Fahrzeugs bzw. für die Anzeigevorrichtung erzeugen.

Wurde beispielsweise von dem Beifahrer 3 eine Bedienfunktion betätigt, mit welcher die Temperatur einer Klimaeinrichtung verändert werden soll, erzeugt die Steuervorrichtung 8 ein Steuersignal für die Klimaeinrichtung, durch welche die Temperatur auf der Seite des Beifahrers 3 entsprechend geregelt wird. Dieses Steuersignal kann von der Steuervorrichtung 8 über einen Fahrzeugbus 9 an die Klimaeinrichtung des Fahrzeugs übertragen werden.

Des Weiteren können komplexere Bedienvorgänge, wie beispielsweise das Navigieren durch Menüs, die auf dem Display 1 der Anzeigevorrichtung angezeigt werden, von der Steuervorrichtung 8 gesteuert werden. In diesem Fall verändert das Steuersignal die auf dem Display 1 angezeigte Information für den Betrachtungswinkel der Sitzposition, von der aus die Bedienfunktion betätigt wurde. Es wird somit beispielsweise dem Fahrer 2 das Menü der Navigationsvorrichtung für den Betrachtungswinkel A angezeigt, ohne dass die Anzeige für den Betrachtungswinkel B beeinflusst wird. Der Fahrer 2 kann nun mittels seiner Fingerspitzen 6 durch die Menüs der Navigationsvorrichtung navigieren, indem er seine Fingerspitze 6 vor entsprechende Flächen des Displays 1 bringt. Der entsprechende Bedienvorgang wird daraufhin nur für den Betrachtungswinkel A angezeigt, da die Sitzposition des betätigenden Nutzers 2 identifiziert wird.

In der Steuervorrichtung 8 ist eine Liste mit Bedienfunktionen gespeichert, die von bestimmten Nutzergruppen oder von bestimmten Sitzpositionen aus nicht betätigt werden dürfen. Eine Gruppe von Bedienfunktionen umfasst die Anwendungen, welche zu einer zu starken Ablenkung des Fahrers führen können. Falls bei einer Betätigung einer Bedienfunktion erfasst wird, dass die Bedienung von der Sitzposition des Fahrers 2 aus ausgelöst werden soll, wird kein Schaltsignal für diese Bedienfunktion erzeugt, so dass diese Bedienfunktion von der Sitzposition des Fahrers 2 aus nicht betätigt werden kann. Beispielsweise kann der Aufruf bestimmter Sonderziele in der Navigationsvorrichtung für den Fahrer 2 gesperrt sein. Des Weiteren können Anwendungen, wie beispielsweise die Film- und Fotobetrachtung für den Fahrer 2 gesperrt werden.

Über die Identifikation des Nutzers kann ferner erfasst werden, ob beispielsweise ein Kind die Bedienfunktion betätigen will. Für diese Benutzergruppe können bestimmte Anwendungen gesperrt werden, wie beispielsweise die Betätigung der Navigationsvorrichtung.

Gemäß einem weiteren Ausführungsbeispiel wird die Bedienfunktion nicht über das Display 1 betätigt, sondern über ein separates, von dem Display 1 abgesetztes Bedienelement. Bei diesem Bedienelement kann es sich beispielsweise um eine Multifunktionsbedienvorrichtung handeln, wie sie in der EP 1 212 208 B1 beschrieben ist. Wie im vorangegangenen Ausführungsbeispiel, zeigt das Display 1 für jeden Betrachtungswinkel A, B verschiedene Bedienfunktionen an. Abweichend vom vorangegangen Ausführungsbeispiel werden diese Bedienfunktionen jedoch nicht dadurch betätigt, dass eine Fingerspitze 6 dem Bereich des Displays 1 angenähert wird, bei dem die zu betätigende Bedienfunktion angezeigt wird. Vielmehr wird das abgesetzte Bedienelement von dem Fahrer 2 oder dem Beifahrer 3 betätigt. Der Nutzer, d.h. der Fahrer 2 oder der Beifahrer 3, wird, wie im vorangegangenen Ausführungsbeispiel, mittels einer Empfangseinrichtung identifiziert, die im abgesetzten Bedienelement untergebracht ist. Auf diese Weise kann weiterhin die Anzeigevorrichtung so gesteuert werden, dass auf dem Display 1 die für den Bedienvorgang relevanten Informationen nur für den Betrachtungswinkel der Sitzposition angezeigt werden, von der aus die Bedienfunktion betätigt wird. Bei der Betätigung durch ein abgesetztes Bedienelement ergibt sich der Vorteil, dass die Information, die für eine Sitzposition dargestellt wird, von der aus aktuell keine Bedienung erfolgt, nicht durch die Bedienung der Anzeigevorrichtung mittels eines berührungsempfindlichen Displays gestört wird.

Weitere Merkmale, die in Bezug auf das vorangegangene Ausführungsbeispiel erläutert wurden, können entsprechend auch bei dem weiteren Ausführungsbeispiel mit dem abgesetzten Bedienelement verwirklicht werden.

### Bezugszeichenliste

- 1: Display
- 2: Fahrer
- 3: Beifahrer
- 4: Fahrersitz
- 5: Beifahrersitz
- 6: Fingerspitze eines Nutzers
- 7: Elektrodeneinrichtung
- 8: Steuervorrichtung
- 9: Fahrzeugbus

## Patentansprüche

1. Verfahren zum Bedienen von Einrichtungen eines Fahrzeugs, bei dem:
- auf einem Display (1) einer Anzeigevorrichtung für verschiedene Betrachtungswinkel (A, B) verschiedene Informationen dargestellt werden, wobei den Betrachtungswinkeln (A, B) Sitzpositionen von Nutzern (2, 3) zugeordnet sind,
- die Position eines Objekts (6) in einer Schaltzone erfasst und ein der Schaltzone zugeordnetes Schaltsignal erzeugt wird,
- die Sitzposition eines dem Objekt (6) zugeordneten Nutzers (2, 3) **dadurch** identifiziert wird, dass ein Identifikationscode mittels einer Elektrodeneinrichtung (7) in den Körper des Nutzers (2, 3) kapazitiv eingekoppelt wird und bei der Empfangseinrichtung kapazitiv ausgekoppelt wird, und
- in Abhängigkeit von dem Schaltsignal und von der Sitzposition des Nutzers (2, 3), der das Schaltsignal ausgelöst hat, ein Steuersignal für die Einrichtungen des Fahrzeugs und/oder die Anzeigevorrichtung erzeugt wird

2. Verfahren nach Anspruch 1,
**dadurch gekennzeichnet,**
**dass** der Sitzposition des Nutzers (2, 3), der das Schaltsignal ausgelöst hat, ein Betrachtungswinkel (A, B) des Displays (1) zugeordnet wird, und die auf dem Display (1) dargestellten Informationen nur für den Betrachtungswinkel dieses Nutzers (2, 3) geändert werden.

3. Verfahren nach Anspruch 1 oder 2,
**dadurch gekennzeichnet,**
**dass** die Schaltzone von einer Fläche des Displays (1) und/oder einem Bereich unmittelbar vor dieser Fläche gebildet wird.

4. Verfahren nach Anspruch 3,
**dadurch gekennzeichnet,**
**dass** bei der Fläche des Displays (1), die einer Schaltzone zugeordnet ist, eine Bedienfunktion angezeigt wird, die **dadurch** betätigt wird, dass ein erfassbares Objekt (6) in die Schaltzone dieser Bedienfunktion gebracht wird.

5. Verfahren nach einem der vorhergehenden Ansprüche,
**dadurch gekennzeichnet,**
**dass** die Position des Objekts (6) **dadurch** erfasst wird, dass die Berührung einer Oberfläche des Displays (1) detektiert wird.

6. Verfahren nach einem der Ansprüche 1 oder 2,
**dadurch gekennzeichnet,**
**dass** die Schaltzone zumindest einem von dem Display (1) abgesetzten Bedienelement zugeordnet ist.

7. Verfahren nach einem der vorhergehenden Ansprüche,
**dadurch gekennzeichnet,**
**dass** das Objekt ein Körperteil (6) eines Nutzers (2) ist.

8. Verfahren nach einem der vorhergehenden Ansprüche,
**dadurch gekennzeichnet,**
**dass** die Position des Objekts (6) durch eine kapazitive Kopplung zwischen dem Objekt (6) und einer bei der Schaltzone angeordneten Empfangseinrichtung erfasst wird.

9. Verfahren nach Anspruch 8,
**dadurch gekennzeichnet,**
**dass** die Anzeigevorrichtung oder das abgesetzte Bedienelement die Empfangseinrichtung umfasst.

10. Verfahren nach einem der vorhergehenden Ansprüche,
**dadurch gekennzeichnet,**
**dass** der Identifikationscode nur dann in den Körper eines Nutzers (2, 3) kapazitiv einkoppelbar ist, wenn dieser auf einer der Elektrodeneinrichtung (7) zugeordneten Sitzposition sitzt.

11. Verfahren nach einem der vorhergehenden Ansprüche,
**dadurch gekennzeichnet,**
**dass** der Identifikationscode den Nutzer (2, 3) und/oder die Sitzposition identifiziert.

12. Verfahren nach Anspruch 11,
**dadurch gekennzeichnet,**
**dass** das Schaltsignal zumindest einer Schaltfläche nur dann erzeugt wird, wenn es von einem bestimmten Nutzer (2, 3) betätigt wird.

13. Verfahren nach Anspruch 11 oder 12,
**dadurch gekennzeichnet,**
**dass** die Art der angezeigten Informationen für einen Betrachtungswinkel (A, B) von dem Identifikationscode des Nutzers (2, 3) auf der diesem Betrachtungswinkel (A, B) zugeordneten Sitzposition abhängt.

14. Verfahren nach einem der vorhergehenden Ansprüche,
**dadurch gekennzeichnet,**
**dass** das Schaltsignal zumindest einer Schaltfläche nur dann erzeugt wird, wenn es von einem Nutzer (2, 3) auf einer bestimmten Sitzposition betätigt wird.

15. Verfahren nach einem der vorhergehenden Ansprüche,
**dadurch gekennzeichnet,**
**dass** die Anordnung der Schaltflächen auf dem Display (1) in der Darstellung für einen Betrachtungswinkel (A, B) ergonomisch der diesem Betrachtungswinkel zugeordneten Sitzposition angepasst wird.

16. Bedienvorrichtung für Einrichtungen eines Fahrzeugs mit
- einer Eingabeeinheit,
- einer Anzeigevorrichtung mit einem Display (1), mit dem für verschiedene Betrachtungswinkel (A, B) verschiedenen Informationen anzeigbar sind, wobei den jeweiligen Betrachtungswinkeln (A, B) Sitzpositionen von Nutzern (2, 3) zugeordnet sind,
- einer Einrichtung zum Erfassen der Position eines Objekts (6) in einer Schaltzone,
- einer Einrichtung zum Identifizieren der Sitzposition eines dem Objekt (6) zugeordneten Nutzers (2, 3) und
- einer Steuereinrichtung (8), mit der in Abhängigkeit von der erfassten Position des Objekts (6) und von der Sitzposition des Nutzers (2, 3) ein Steuersignal für die Einrichtungen des Fahrzeugs und/oder die Anzeigevorrichtung erzeugbar ist,
**dadurch gekennzeichnet,**
- **dass** die Identifikationseinrichtung eine Elektrodeneinrichtung (7) in den Sitzen potenzieller Nutzer (2, 3) umfasst, mittels derer ein Identifikationscode in den Körper des Nutzers (2, 3) kapazitiv einkoppelbar und bei der Empfangseinrichtung kapazitiv auskoppelbar ist.

17. Bedienvorrichtung nach Anspruch 16,
**dadurch gekennzeichnet,**
**dass** das Steuersignal die auf dem Display (1) dargestellten Informationen nur für den Betrachtungswinkel (A, B) der identifizierten Sitzposition ändert.

18. Bedienvorrichtung nach Anspruch 16 oder 17,
**dadurch gekennzeichnet,**
**dass** die Schaltzone von einer Fläche des Displays (1) und/oder einem Bereich unmittelbar vor dieser Fläche gebildet ist.

19. Bedienvorrichtung nach einem der Ansprüche 16 bis 18,
**dadurch gekennzeichnet,**
**dass** die Positionserfassungseinrichtung eine berührungsempfindliche Oberfläche des Displays (1) umfasst.

20. Bedienvorrichtung nach einem der Ansprüche 16 oder 17,
**dadurch gekennzeichnet,**
**dass** die Bedienvorrichtung zumindest ein von dem Display (1) abgesetztes Bedienelement umfasst.

21. Bedienvorrichtung nach Anspruch 20,
**dadurch gekennzeichnet,**
**dass** die Schaltzone dem abgesetzten Bedienelement zugeordnet ist.

22. Bedienvorrichtung nach einem der Ansprüche 16 bis 21,
**dadurch gekennzeichnet,**
**dass** das Objekt ein Körperteil (6) eines Nutzers (2, 3) ist.

23. Bedienvorrichtung nach einem der Ansprüche 16 bis 22,
**dadurch gekennzeichnet,**
**dass** die Positionserfassungseinrichtung eine Empfangseinrichtung umfasst, an die ein Signal von einem Nutzer kapazitiv übertragbar ist, wenn sich ein Körperteil (6) des Nutzers in der Nähe der Empfangseinrichtung befindet.

## Claims

1. Method for operating devices of a vehicle, in which:
- various information items are displayed on a display (1) of a display device for various viewing angles (A, B), wherein seat positions of users (2, 3) are assigned to the viewing angles (A, B),
- the positions of an object (6) in a switching zone is detected and a switching signal assigned to the switching zone is generated,
- the seat position of a user (2, 3) assigned to the object (6) is identified by virtue of the fact that an identification code is capacitively input into the body of the user (2, 3) by means of an electrode device (7) and is capacitively output at the receiver device, and
- a control signal for the devices of the vehicle and/or the display device is generated as a function of the switching signal and of the seat position of the user (2, 3) who has triggered the switching signal.

2. Method according to Claim 1,
**characterized**
**in that** the seat position of the user (2, 3) who has triggered the switching signal is assigned a viewing angle (A, B) of the display (1), and the information items which are displayed on the display (1) are changed only for the viewing angle of this user (2, 3).

3. Method according to Claim 1 or 2,
**characterized**
**in that** the switching zone is formed by an area of the display (1) and/or by a region directly in front of this area.

4. Method according to Claim 3,
**characterized**
**in that** an operator control function is displayed at the area of the display (1) assigned to a switching zone, said operator control function being activated by virtue of the fact that a detectable object (6) is moved into the switching zone of this operator control function.

5. Method according to one of the preceding claims,
**characterized**
**in that** the position of the object (6) is detected by virtue of the fact that contact with a surface of the display (1) is detected.

6. Method according to one of Claims 1 or 2,
**characterized**
**in that** the switching zone is assigned to at least one operator control element which is offset from the display (1).

7. Method according to one of the preceding claims,
**characterized**
**in that** the object is a body part (6) of a user (2).

8. Method according to one of the preceding claims,
**characterized**
**in that** the position of the object (6) is detected by means of capacitive coupling between the object (6) and a receiver device which is arranged at the switching zone.

9. Method according to Claim 8,
**characterized**
**in that** the display device or the offset operator control element comprises the receiver device.

10. Method according to one of the preceding claims,
**characterized**
**in that** the identification code can be input capacitively into the body of a user (2, 3) only if the latter is seated at a seat position assigned to the electrode device (7).

11. Method according to one of the preceding claims,
**characterized**
**in that** the identification code identifies the user (2, 3) and/or the seat position.

12. Method according to Claim 11,
**characterized**
**in that** the switching signal of at least one button is generated only if it is activated by a specific user (2, 3).

13. Method according to Claim 11 or 12,
**characterized**
**in that** the type of displayed information items for a viewing angle (A, B) depends on the identification code of the user (2, 3) at the seat position assigned to this viewing angle (A, B).

14. Method according to one of the preceding claims,
**characterized**
**in that** the switching signal of at least one button is generated only if it is activated by a user (2, 3) at a specific seat position.

15. Method according to one of the preceding claims,
**characterized**
**in that** the arrangement of the buttons in the representation of a viewing angle (A, B) on the display (1) is adapted ergonomically to the seat position assigned to this viewing angle.

16. Operator control for devices of a vehicle, having
- an input unit,
- a display device having a display (1) with which various information items can be displayed for various viewing angles (A, B), wherein seat positions of users (2, 3) are assigned to the respective viewing angles (A, B),
- a device for detecting the position of an object (6) in a switching zone,
- a device for identifying the seat position of a user (2, 3) assigned to the object (6), and
- a control device (8) with which a control signal for the devices of the vehicle and/or the display device can be generated as a function of the detected position of the object (6) and of the seat position of the user (2, 3),
**characterized**
- **in that** the identification device comprises an electrode device (7) in the seats of potential users (2, 3), by means of which electrode device (7) an identification code can be input capacitively into the body of the user (2, 3) and can be output capacitively at the receiver device.

17. Operator control according to Claim 16,
**characterized**
**in that** the control signal changes the information items displayed on the display (1) only for the viewing angle (A, B) of the identified seat position.

18. Operator control according to Claim 16 or 17,
**characterized**
**in that** the switching zone is formed by an area of the display (1) and/or a region directly in front of this area.

19. Operator control according to one of Claims 16 to 18,
**characterized**
**in that** the position detection device comprises a touch-senisitive surface of the display (1).

20. Operator control according to one of Claims 16 or 17,
**characterized**
**in that** the operator control comprises at least one operator control element which is offset from the display (1).

21. Operator control according to Claim 20,
**characterized**
**in that** the switching zone is assigned to the offset operator control element.

22. Operator control according to one of Claims 16 to 21,
**characterized**
**in that** the object is a body part (6) of a user (2, 3).

23. Operator control according to one of Claims 16 to 22,
**characterized**
**in that** the position detection device comprises a receiver device to which a signal can be transmitted capacitively from a user if a body part (6) of the user is located in the vicinity of the receiver device.

## Revendications

1. Procédé pour commander des équipements d'un véhicule, dans lequel :
- des informations différentes sont représentées sur un écran (1) d'un dispositif d'affichage pour différents angles d'observation (A, B), les angles d'observation (A, B) étant associés aux positions de siège des utilisateurs (2, 3) ;
- la position d'un objet (6) étant détectée dans une zone de connexion et un signal de connexion associé à la zone de connexion étant émis ;
- la position de siège d'un utilisateur (2, 3) associé à l'objet (6) étant identifiée en ce qu'un code d'identification est envoyé de façon capacitative par le corps de l'utilisateur (2, 3) à l'aide d'un agencement d'électrodes (7) et reçu de façon capacitative par le dispositif de réception ; et
- en fonction du signal de connexion et de la position de siège de l'utilisateur (2, 3) qui a déclenché le signal de connexion, un signal de commande est émis pour les équipements du véhicule et/ou pour le dispositif d'affichage.

2. Procédé selon la revendication 1, **caractérisé en ce qu'**un angle d'observation (A, B) de l'écran (1) est associé à la position de siège de l'utilisateur (2, 3) qui a déclenché le signal de connexion et que les informations représentées sur l'écran (1) ne sont modifiées que pour l'angle d'observation de cet utilisateur (2, 3) précis.

3. Procédé selon la revendication 1 ou 2, **caractérisé en ce que** la zone de connexion est constituée par une surface de l'écran (1) et/ou par une zone placée directement devant cette surface.

4. Procédé selon la revendication 3, **caractérisé en ce qu'**une fonction de commande est affichée sur la surface de l'écran (1) associée à une zone de connexion, ladite fonction de commande étant déclenchée par la détection d'un objet (6) dans la zone de connexion de cette fonction de commande.

5. Procédé selon l'une quelconque des revendications précédentes, **caractérisé en ce que** la position de l'objet (6) est détectée en détectant l'effleurement d'une surface de l'écran (1).

6. Procédé selon l'une quelconque des revendications 1 ou 2, **caractérisé en ce que** la zone de connexion est associée à au moins un élément de commande décalé par rapport à l'écran (1).

7. Procédé selon l'une quelconque des revendications précédentes, **caractérisé en ce que** l'objet est une partie du corps (6) d'un utilisateur (2).

8. Procédé selon l'une quelconque des revendications précédentes, **caractérisé en ce que** la position de l'objet (6) est déterminée par un couplage capacitatif entre l'objet (6) et un dispositif de réception disposé dans la zone de connexion.

9. Procédé selon la revendication 8, **caractérisé en ce que** soit le dispositif d'affichage soit l'élément de commande décalé comprennent le dispositif de réception.

10. Procédé selon l'une quelconque des revendications précédentes, **caractérisé en ce que** le code d'identification ne peut être envoyé de façon capacitative par le corps d'un utilisateur (2, 3) que lorsque celui-ci est assis sur une position de siège associée à l'agencement d'électrodes (7).

11. Procédé selon l'une quelconque des revendications précédentes, **caractérisé en ce que** le code d'identification identifie l'utilisateur (2, 3) et/ou la position de siège.

12. Procédé selon la revendication 11, **caractérisé en ce que** le signal de connexion d'au moins une surface de connexion n'est émis que lorsqu'il est déclenché par un utilisateur (2, 3) donné.

13. Procédé selon la revendication 11 ou 12, **caractérisé en ce que** le type d'informations affichées pour un angle d'observation (A, B) dépend du code d'identification de l'utilisateur (2, 3) placé sur la position de siège associée à cet angle d'observation (A, B).

14. Procédé selon l'une quelconque des revendications précédentes, **caractérisé en ce que** le signal de connexion d'au moins une surface de connexion n'est émis que lorsqu'il est déclenché par un utilisateur (2, 3) placé sur une position de siège donnée.

15. Procédé selon l'une quelconque des revendications précédentes, **caractérisé en ce que** l'agencement des surfaces de connexion sur l'écran (1) est adapté à la représentation ergonomique pour un angle d'observation (A, B) donné de la position de siège associée à cet angle d'observation.

16. Dispositif de commande pour équipements d'un véhicule doté :
- d'une unité de saisie ;
- d'un dispositif d'affichage équipé d'un écran (1), permettant d'afficher des informations différentes pour différents angles d'observation (A, B), les positions de siège des utilisateurs (2, 3) étant associées aux angles d'observation (A, B) respectifs ;
- d'un dispositif de détermination de la position d'un objet (6) dans une zone de connexion ;
- d'un dispositif d'identification de la position de siège d'un utilisateur (2, 3) associé à l'objet (6).
- d'un dispositif de commande (8) permettant d'émettre un signal de commande pour les équipements du véhicule et/ou pour le dispositif d'affichage en fonction de la position déterminée de l'objet (6) et de la position de siège de l'utilisateur (2, 3) ;
**caractérisé en ce que** :
- le dispositif d'identification comprend un agencement d'électrodes (7) placé dans les sièges d'utilisateurs (2, 3) potentiels à l'aide duquel un code d'identification peut être envoyé de façon capacitative par le corps de l'utilisateur (2, 3) et peut être reçu de façon capacitative par le dispositif de réception.

17. Dispositif de commande selon la revendication 16, **caractérisé en ce que** le signal de commande modifie les informations représentées sur l'écran (1) seulement pour l'angle d'observation (A, B) de la position de siège identifiée.

18. Dispositif de commande selon la revendication 16 ou 17, **caractérisé en ce que** la zone de connexion est constituée par une surface de l'écran (1) et/ou par une zone placée directement devant cette surface.

19. Dispositif de commande selon l'une quelconque des revendications 16 à 18, **caractérisé en ce que** le dispositif de détermination de position comprend une surface tactile de l'écran (1).

20. Dispositif de commande selon l'une quelconque des revendications 16 ou 17, **caractérisé en ce que** le dispositif de commande comprend au moins un élément de commande décalé par rapport à l'écran (1).

21. Dispositif de commande selon la revendication 20, **caractérisé en ce que** la zone de connexion est associée à l'élément de commande décalé.

22. Dispositif de commande selon l'une quelconque des revendications 16 à 21, **caractérisé en ce que** l'objet est une partie du corps (6) d'un utilisateur (2, 3) .

23. Dispositif de commande selon l'une quelconque des revendications 16 à 22, **caractérisé en ce que** le dispositif de détermination de position comprend un dispositif de réception au niveau duquel un signal peut être transmis de façon capacitative par un utilisateur lorsqu'une partie du corps (6) de l'utilisateur se trouve à proximité du dispositif de réception.
